# EUROPEAN PATENT SPECIFICATION

(11) **EP 2 822 723 B1**
(45) Date of publication and mention of the grant of the patent: **18.05.2016**
(21) Application number: 13722578.5
(22) Date of filing: 08.03.2013
(51) Int. Cl.: B23D 57/00

(54) **CIRCUMFERENTIAL COVERING BAND FOR SUPPORTING AND GUIDING WIRES IN MULTI-WIRE CUTTING MACHINES, ROLLER COVERED WITH THE SAME, AND METHOD FOR APPLYING IT TO A ROLLER**
UMLAUFENDES ABDECKBAND ZUM STÜTZEN UND FÜHREN VON DRÄHTEN IN MEHRADRIGEN SCHNEIDMASCHINEN, DAMIT BESCHICHTETE WALZE SOWIE VERFAHREN ZUM AUFTRAGEN AUF EINE WALZE
BAND DE COUVERTURE CIRCONFERENTIELLE POUR SUPPORTER ET GUIDER DES CABLES DANS UNE SCIE A CABLES MULTIPLES, ROULEAU RECOUVERT PAR CELLE-CI, ET METHODE POUR L'APPLIQUER SUR UN ROULEAU

(30) Priority: 09.03.2012 IT MO20120060
(43) Date of publication of application: 14.01.2015
(73) Proprietor: Pedrini SpA ad Unico Socio, 24060 Carobbio degli Angeli (BG) (IT)
(72) Inventor: Pedrini, Luigi, deceased (IT)
(74) Representative: Gasparini, Alberto
(86) International application number: PCT/IT2013/000071
(87) International publication number: WO 2013/132527

(56) References cited:
- WO-A1-2009/001242
- WO-A1-2011/161713
- WO-A1-2013/093948
- PT-A- 106 135
- US-A- 5 910 203

## Description

### Field of application

The invention here described refers to a band in a soft material for covering a support roller or drum for transmitting motion or guiding wires with diamond inserts in a multiple-wire machine for cutting blocks of natural or artificial stone according to the preamble of claim 1 the invention also relates to a roller or support drum according to the preamble of claim 7. The invention also concerns a procedure for applying the covering in a soft material to a support roller or drum according to the preamble of claim 12.

Such a band, such roller ans such procedure are known from WO2009001242A1.

### State of the art

Rollers or drums for rings of wires with diamond inserts are envisaged with a covering in a soft material so as to reduce wear in the drive grooves that house the wires, and so as to protect the said grooves from the high degree of abrasion from the diamond inserts with which the wires are equipped.

Current technology, in multiple-wire machines which employ rings of wires with diamond inserts on rollers or drums, comprises grooves in a soft material for housing single wires with diamond inserts in order to reduce the wear of the said grooves. Grooves in a soft material are necessary in the rollers or drums so as to reduce the wear caused by contact between the wires with diamond inserts and the grooves in which they are employed. Moreover, the wear occurs given the difference in speed, albeit slight, among the single wires with diamond inserts closed in a ring, this difference being due to the inevitable difference in length of the separate rings; wear is due to the wire running in its groove compared with the wires in other grooves: the roller or drum is thus worn in some of the grooves, that is in those occupied by wires running at different speeds compared to the peripheral speed of the roller or drum which, being a single body, must run with a single rotational speed. The wear in the groove is therefore an average between possible wear and the type of cut performed by the rings in wires with diamond inserts, this wear being distributed on the basis of the slight difference in speed between the wires.

The wire with diamond inserts, as is well known, consists of a steel cable made of several wires on which, at pre-set intervals, a larger diameter insert in a diamond material is anchored. When cutting takes place, the wires in contiguous rings are placed to cut zones in the block of stone that may present differences in hardness. The required tension in the wires varies from zone to zone and is correlated to the difficulty encountered in cutting the stone, and thus contiguous wires lengthen, in a not dissimilar way, due to the tension of the cut; this creates slight differences in speed, which only become significant in wires distant from each other. Thus, the contiguous grooves covered in a soft material become worn if the wires they house develop a discrepancy in the ring such as to produce a difference in tangential speed in the roller grooves.

Various technical solutions have been adopted to obviate the differences between the wires. The rollers or drums generally feature a cylindrical surface covered in a soft material which, due to a process of hardening, is vulcanised while it is at work, so as to form a covering which adheres rigidly to the roller or drum of adequate hardness. With use, the soft material in the grooves, even though it has been hardened, gradually becomes worn, and the wires it houses are prevented from being guided correctly. It therefore becomes necessary to replace the material, as mentioned above: the covering is removed and worked on mechanically, and is thereafter replaced and the new covering vulcanised once more.

Solutions have been proposed in which rings are mounted in a soft covering material, forming the grooves themselves, on a cylindrical surface of the roller or drum, and inside the groove: the rings being able to run over the cylindrical surface in tandem, in such a way as to compensate for the different speeds between wires with diamond inserts they present.

The specific technology relating to drums for cutting stone with multiple-wires includes the Italian application for a patent TO2006A000257 in which a drum is described for multiple-wire machines for cutting blocks of stone with wires with diamond inserts; said drums featuring a cylindrical surface with coaxial rings in a polyurethane material, these rings being fitted on the said drum and tightened so as to form an external surface with grooves to guide and support the wires with diamond inserts; each ring can be replaced individually after the previous rings have been removed between it and the extremity of the drum. Each ring is provided with several grooves on its external surface, and is inserted tight in the cylindrical surface of the drum by interference, thus avoiding the vulcanising operation when one of the rings, whose grooves have been damaged through use, is being replaced.

This solution, although being less costly than the complete vulcanisation of the covering of the material in contact with the wires with diamond inserts, proves inefficient when the rings with damaged grooves are being replaced, since contiguous rings, external to the one being replaced, have to be unthreaded in order to replace an internal damaged ring, and this involves considerable extra work.

The application for patent EP 2123384 A1 describes the process of anchoring ring elements for reducing wear, said elements being equipped with one or three grooves and mounted on pulley discs, each one rotating independently so as to support a single wire with diamond inserts, which is employed on the single groove or in one of the three grooves present on the external cylindrical surface of the pulley disc. The ring element for reducing wear is fixed on the disc in a radial direction and secured by vulcanisation.

This latter version, constructed on rollers and drums, which not only guide the wires for cutting but also perform a drive function, has limited applicability where, to replace the coverings of the more central pulleys, it is necessary to disassemble the external pulley discs, working from the side of the roller or drum towards the pulley disc, whose ring with the anti-wear element is being replaced. These types of machine often feature from 30 to 80 wires with diamond inserts in a closed ring, these wires being activated simultaneously for cutting sheets of stone.

The proposed solutions featured in the current technology are of limited practicability, both from the application and maintenance point of view, and are also costly, since, as the document just cited points out, they involve as many pulleys side by side, albeit within the same roller or drum, as there are contiguous wires with diamond inserts, which may be several score. Thus, since replacement is difficult, the cost of maintenance is not sufficiently reduced for the rollers for wires with diamond inserts, which are most worn in the grooves of the soft material, given their proximity to the block of stone being worked.

Finally, versions are registered in which the roller or drum used in this type of multiple-wire cutting machine is covered with bands in cladding material with several grooves, and which is cut to a pre-set length, so as to cover a site on the circumference of the roller or drum on which it is mounted; its extremities are fixed by means of a device which applies pressure on the said extremities in a specific position on the circumference of the roller or drum. This form of covering also requires a means of anchoring the band to the circumference surface of the roller or drum, such as to hold the entire band in position by means of internal grooves, inside of which protuberances are inserted internal to the band itself. The device applying the pressure is itself also provided with a portion of soft material, with grooves distributed in correspondence with the grooves present on the external surface of the band, which is anchored on the cylindrical surface of the roller or drum.

However, though this latter solution represents per se an improvement over previous technology, it still requires a specific site for the device applying the pressure; it also implies that the grooves housing the protuberances should be placed internal to the bands, and this solution proves costly and not very versatile, being adaptable only to newly constructed rollers or drums and not to subsequent maintenance carried out on existing rollers or drums.

Current technology related to support rollers or drums for transmitting motion or guiding wires with diamond inserts closed in a ring, and used in machines for cutting blocks of natural or artificial stone, can thus be further improved by overcoming the above-mentioned shortcomings, and, in particular, by making maintenance more simple and rapid.

Thus, the technical problem to which the invention here presented responds is that of creating a roller or drum that offers, in the support organ which transmits motion and/or guides the wires with diamond inserts, an economical method of dealing with wear in the grooves deriving from the different speeds of the wires; it is also that of offering a system that is less expensive to apply, easy to mount, and with a configuration such as to facilitate replacement of the soft covering material at a much lower production and maintenance cost.

A further objective of the invention here described is to create a band in a soft material which is easily applied to the external surface of the roller or drum, also on rollers or drums undergoing maintenance, in which the grooved covering material is being replaced.

Finally, the technical problem represented by the foregoing is that of creating a new method of application and subsequent maintenance, whereby the soft-grooved covering material is replaced cheaply, rapidly and easily.

### Summary of the invention

The invention here described resolves this technical problem by using a band in a soft material according to claim 1.

In a further and advantageous version: the means of reinforcing and rigidifying consists of a skeleton of transverse stays the length of the band, being connected to the extremity of the band, and provided with holes for fixing anchorage elements; with said elements the said extremity is connected to a device for tensing the band; said device being also provided with holes for fixing said band to the cylindrical surface of the roller or drum.

In addition, in a further perfected version, the skeleton of transverse reinforcing stays is connected to the extremity of the band by means of protuberances and pins inserted transversally the length of the band in holes sunk in the band, in the said skeleton of stays or in the said protuberances of the skeleton for reinforcing and rigidifying the band.

Moreover, in a specifically perfected version, the means of reinforcing and rigidifying the extremities features a rigid material which has been bent to the profile of the cylindrical surface of the roller or drum on which it is to be mounted.

Furthermore, in a specific version, the means of reinforcing and rigidifying the band features holes where eyelets can be fixed for attaching elements used in mounting the band on the roller or drum.

Further still, in a specific and preferred version, the system for reinforcing and rendering the band rigid features threaded holes for connecting the device which tenses the band and mounts it on the roller or drum.

According to the invention, there is provided a support roller or drum according to claim 7.

In a further enhanced version, the tensing device consists of two parts which are coupled at either end of the band, and elements for anchoring that join each part of the respective ends of the band, as well as a means of bringing the two parts together and, therefore, also the extremities of the band, in such a way as to place the band under the pre-set tension value and in close contact with the cylindrical surface of the roller or drum on which it is mounted.

Furthermore, in a perfected version, the tensing device consists of a vice divided into two parts, equipped with lower surfaces for coupling to the external surface of the said band and holes for housing elements for anchoring either extremity, by means of the respective systems for reinforcing and rigidifying, and fixing each extremity to the cylindrical surface of the roller or drum, using the said device for fixing and rigidifying, by means of fixing elements, for fixing the said extremities.

Yet again, in a specific version, the elements involved in anchoring the extremities of the band and the parts of the tensing device consist of threaded screws applied to threaded holes in the device for reinforcing and making either extremity of the band rigid.

Furthermore, in a specific design version, the elements used for fixing the band's extremities to the cylindrical surface of the roller or drum feature threaded screws inserted into threaded holes sunk in the cylindrical surface of the roller or drum.

According to invention, there is also provided a procedure for applying a covering in a soft material for a support roller or drum according to claim 12.

In a further enhanced method of application, fixing the first extremity of the band in a soft material is achieved using fixture holes previously created for this purpose in the band covering the roller or drum.

Further still, in a specifically enhanced application procedure, the extremities of the band in a soft material are fixed by means of holes made for the fixture elements in different points on the cylindrical surface being applied with respect to application holes made in the previous band in a soft material.

Further features and benefits of the invention here described for creating a support roller or drum for transmitting motion or guiding wires with diamond inserts in a multiple-wire machine for cutting blocks of natural or artificial stone will become apparent from the description that follows of a specimen design version which is given as an illustrative but not exhaustive example, and refers to the six drawing sheets enclosed.

### Brief description of the drawings

Figure 1 represents a schematic, perspective view of a support roller or drum for transmitting motion or guiding wires with diamond inserts, on which a covering in a soft material is applied, said covering band provided with grooves for housing wires and the band itself, which is stretched the length of the circumference of said roller or drum, before being mounted: the other portions of the roller are without the respective circumference band;
Figure 2 represents a schematic, perspective view of the roller or drum in Figure 1 with the application of a device for tensing the extremities of the band, here provided with a vice for fixing the band in a soft material to the surface of the roller itself;
Figure 3 represents an enlarged, schematic, perspective view of the device for tensing the extremities of the band, here provided with a vice for fixing the band in a soft material;
Figure 4 represents an enlarged, schematic, perspective view of the band itself, seen from the external surface with the grooves, the two extremities of the band brought together as in the final phase of the fixing operation, when the band is applied to the cylindrical surface of the roller or drum;
Figure 5 represents an enlarged, schematic, perspective view of one of the band's extremities, seen from the internal side, with an exploded view of components for reinforcing and rendering the extremity rigid;
Figure 6 represents an enlarged, schematic, perspective view of the extremity depicted in Figure 5, here reassembled and ready for mounting;
Figure 7 represents a schematic, perspective view of the extremities of the band at the moment of fixing, and with an exploded view of the vice showing its components with the elements for anchoring the parts of the vice on either extremity of the band which is to be mounted on the roller;
Figure 8 represents a schematic, perspective view, analogous to Figure 7, showing the components for reinforcing and rendering rigid the extremities, which have been brought together, as well as the elements for fixing the extremities on the peripheral surface of the roller or drum;
Figure 9 represents an enlarged, schematic, longitudinal perspective section of the vice applied to the band's extremities during the final stage of the mounting operation; the plan section in one part of the vice runs along the axis of a tie rod and on the other part of the vice is an element for fixing one extremity to the cylindrical surface of the roller;
Figure 10 represents an enlarged, schematic, transverse section in perspective of the vice applied to the extremity of the band after mounting, the section plane being along the line of elements that anchor the vice to the band's extremity, which corresponds, in the version here represented, with the line of elements which fix the extremity of the band on the surface of the roller or drum;
Figure 11 represents a schematic, transverse section on a plane corresponding to the section plane in Figure 10 of the band mounted on the roller or drum while the machine is running with eight wires with diamond inserts housed in the respective grooves of the band that covers the rollers or drums in a soft material.

### Detailed description of a preferred embodiment

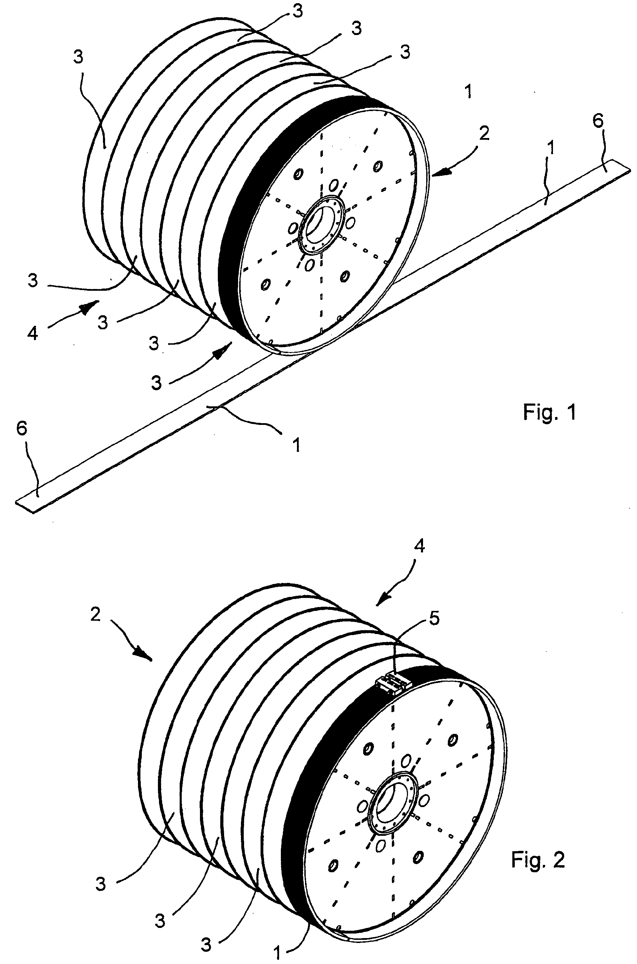

Figure 1 shows the band 1 in a soft material both fixed to a roller or drum 2, in a portion 3 of the roller's cylindrical surface circumference 4, and unwound along its length. The roller 2 depicted reveals its capacity to house eight bands 1, one in each portion of the circumference 3 of which it consists.

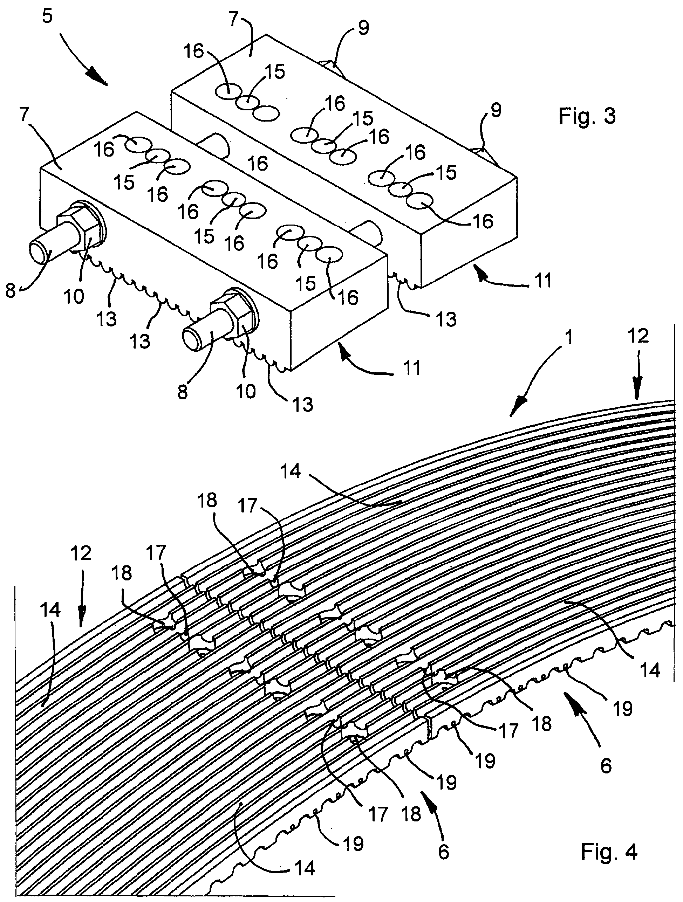

Figure 2 shows a vice 5, used to tighten the covering band, and to fix the extremities 6 of the band 1 in a soft material. In addition, Figures 3 and 4 show the two parts 7 of the vice, connected by tie rods 8, here depicted as bolts 9 and nuts 10 and used to bring together the above-mentioned parts 7 of the vice 5, by tensing the band 1; when the said parts are firmly anchored to the extremities 6 of the band 1, they place said band under tension throughout its circumference. The sides 11 of the parts 7 of the vice which are to come into contact with the external surface 12 of the band 1, are equipped with protuberances 13 for coupling them with the respective grooves 14, present on the external side of the band 1; grooves which, in their final function, house the wires with diamond inserts. The respective parts 7 of the vice 5 are anchored to each of the band's extremities 6 1, which are mounted by connecting the anchoring elements to the said parts 7 by means of the holes 15. In the parts 7 of the vice, holes 16 are also provided for the elements used in fixing the extremities 6 to the surface of the roller or drum 2. The anchoring elements join each part 7 of the vice to the respective extremity 6 using holes 17 in the extremity of the band, while the band itself is fixed to the cylindrical surface 4 of the roller 2 with fixing elements using holes 18 present on the extremity 6 of the band 1. Figure 4 shows transverse holes 19 sunk into the band 1, where a device for lending reinforcement and rigidity to the band is joined to the band itself, here not depicted, by means of transverse pins.

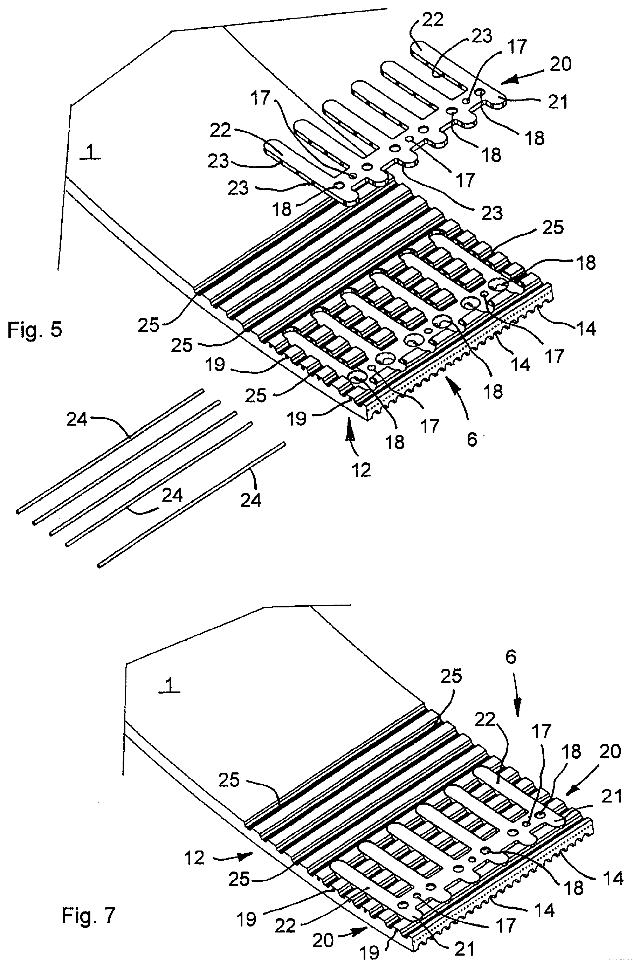

Figure 5 shows the elements used to reinforce and render rigid the extremities 6, here comprising a skeleton of reinforcing stays 20, featuring front 21 and rear 22 protuberances with transverse holes 23, which correspond to transverse holes 19 for the insertion of transverse pins 24, of which one is housed in front of the reinforcement skeleton 20 and others behind, in order to anchor each extremity 6 of the band to its respective reinforcing stays 20. While the extremities 6 of the band 1 present transverse grooves 25 running the length of the bands, their presence or absence actually makes no difference in constructing the invention.

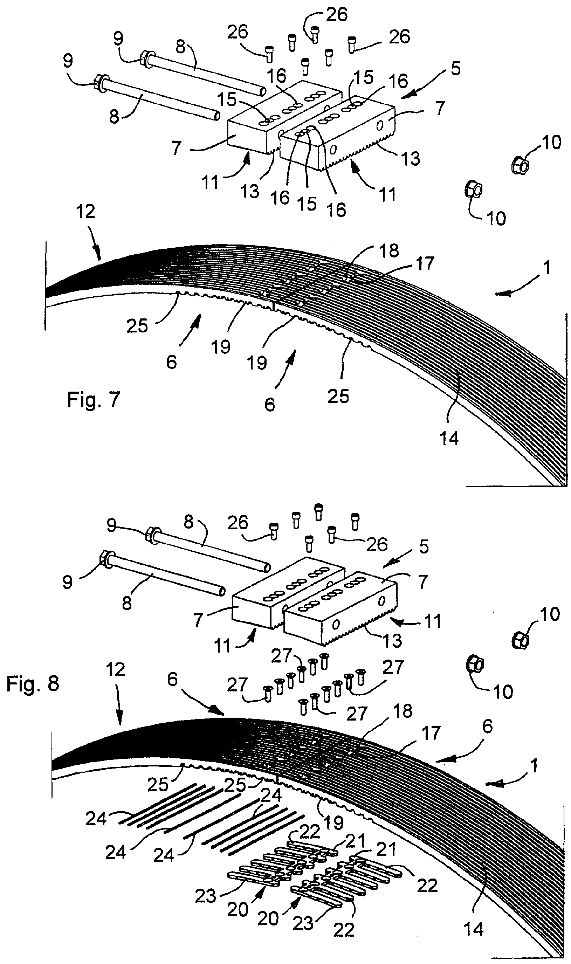

In addition, Figures 7 and 8 show the components that make up the vice 5; Figure 7 shows the vice itself, while Figure 8 shows the vice as well as the reinforcing and rigidifying elements, that is to say the skeleton of stays at the two extremities 6 of the band. These Figures show the anchoring elements 26 in the parts 7 of the vice at the band's extremity 6, as well as the fixing elements 27 of the band's 1 two extremities 6, when it is mounted on the cylindrical surface 4 of the roller or drum 2. The said fixing elements 27 are housed in holes 28 sunk in the cylindrical surface 4 of the roller 2, in order to fix the skeleton of reinforcing stays 20, as the reinforcing and rigidifying member, and, with it, the extremity 6 of the band 1, to the cylindrical surface of the roller.

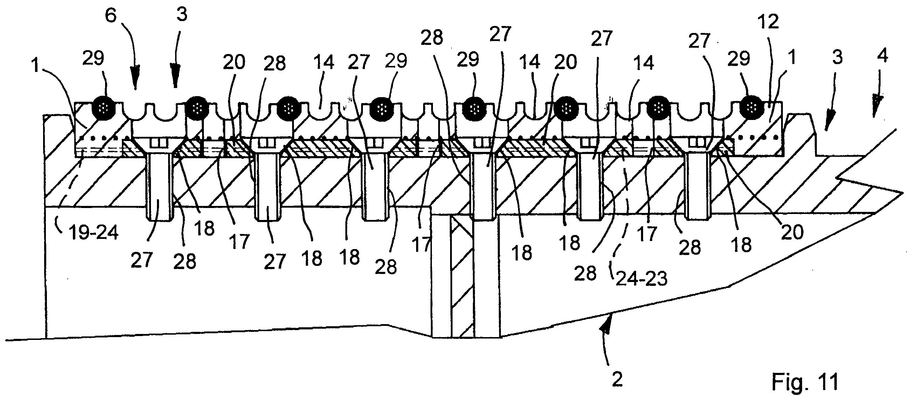

Figure 11, in conclusion, shows the wires 29 with the diamond inserts, housed in their respective grooves 14 in the band 1 as per normal operating conditions, with the joint at the extremities 6 of the band on the roller or drum 2 of a multiple-wire machine for cutting natural or artificial stone as described above. The distance between two contiguous wires 29 is depicted on the basis of the thickness to which the stone block is to be cut, as is known to current technology, and is here seen at the minimal thickness for the multiple-wire cutting machines in question. In portions of the circumference 3 contiguous to that depicted, a corresponding band 1 in a soft material is fixed in like manner to house other wires 29 so as to complete the covering of the cylindrical surface 4 of the roller or drum 2.

Mounting the roller or drum, covered with bands in a soft material, and featuring grooves 14 to house the wires 29 with diamond inserts, is achieved by means of the following procedure.

The band 1 is wound around the cylindrical surface 4 of the roller 2, the extremities 6 of said band having been previously provided with a skeleton 20 of reinforcing stays, said skeleton forming the member for reinforcing and anchoring each extremity 6, which is fixed to its respective extremity 6 by means of pins 24 inserted in corresponding holes 19 of the extremity of the band, and holes 23, present in the front 21 and rear 22 protuberances of the skeleton 20 of reinforcement stays, not in a position corresponding to the fixing elements 27; this operation can be carried out directly when the band 1 is constructed and the bands, cut to the appropriate size for a specific roller or drum, can be kept in stock ready to be mounted, where necessary, at minimal cost from the point of view of production, assembly, transport and/or warehousing.

Anchoring a part 7 of the vice 5 to one of the extremities 6 of the band 1 is achieved by applying the anchoring elements 26, here depicted in their advantageous form as threaded screws inserted in holes 17 in the reinforcing skeleton 17, said holes being threaded to receive them. The skeleton of reinforcing stays 20 and its related protuberances 21 and 22 can be pre-emptively curved in order to achieve optimum adaptability to the curved surface of the roller or drum for which it is designed. Each part 7 of the vice is thus solidly anchored to its respective extremity 6 of the band 1 before being mounted; the protuberances 13 of the lower surfaces 11 of each part 7 are housed in the grooves 14 with which the external surface 12 of the band 1 is provided. Once the band is housed in the portion 3 of the cylindrical surface 4 of the roller or drum on which it has to be mounted, the parts 7 of the vice are connected by means of tie rods 8, that is by reassembling bolts 9 with their respective nuts 10 as in the case of assembling a roller or drum still mounted on the multiple-wire machine, but it can also be mounted with the band 1 and the vice 5 already composed, as when said band is mounted in the workshop after the roller 2 has been extracted from the multiple-wire machine, or when it is constructed for the first time.

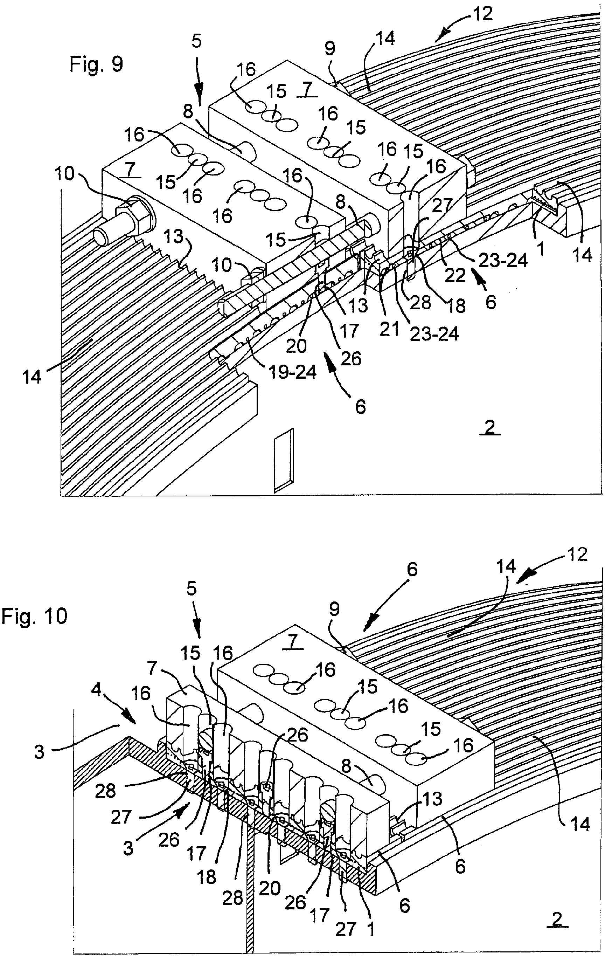

In Figures 9 and 10 it can be seen that the said tie rods occupy the holes 15 for mounting the said anchoring elements 26, but leave the holes 16 free for fixing the extremities 6 of the band 1 on the cylindrical surface of the roller or drum 2. Subsequently, the tie rods are tightened until the band 1 achieves the desired tension, and this is done so as to ensure that the band adheres properly to the cylindrical surface of the roller or drum. The tension in the band is verified by applying torsion to each of the said tie rods 8. Thus, the first extremity 6 is fixed in the holes 28 by means of inserting the fixing elements 27, which can be advantageously constructed with threaded screws inserted in threaded holes, as seen in the Figures.

Thus, once the first extremity 6 of the band is fixed, in any point of the circumference surface in a portion 3 of the roller's 2 cylindrical surface 4, the tension in the band 1 can be checked before fixing the second extremity 6, performing the holes 28 for inserting the fixing elements 27, which, as happened when the first extremity was fixed, and as is seen in the Figure, can be in the form of threaded screws inserted into threaded holes.

As mentioned above, the operations for fixing the extremities 6 to the band 1 can be carried out at the same time or also separately, first one extremity, then the other, checking the tension in the band just before commencement of the fixing operation.

Thus, fixing the extremities can be achieved by means of threaded screws and holes, but, at least in fixing the first of the extremities 6 by making the holes 28, it can also be achieved by using rivets or other elements, so as to place the band under tension by tightening the tie rods 8 after fixing the first of the two extremities 6 to the surface of the roller 2 and the second extremity 6, after opportune tightening, making holes 4 in the cylindrical surface and, if necessary, threading them, such as to insert the fixing elements 27 with the band 1 already under tension.

During maintenance: when some of the internal grooves on one of the bands 1 in portions 3 of the roller's circumference 2 have become worn, the respective bands 1 are removed from the affected portions 3 only and replaced with new bands, and mounted as described above under procedures for mounting a band on a new roller 2. In the event that the replacement bands do not have the same length as the band originally mounted, it is possible to make the holes 28 in a new section of the cylindrical surface 4 of the roller, in other words changing to another position of the portion 3 of the roller's circumference, so as to make the holes 28 afresh, both for fixing the band's 1 first extremity 6 and also the second. As mentioned, the holes 28 for fixing the second extremity of the band are to be made in an area of the portion 3 where there were no holes previously, and this in order to tense the band 1 with precision, while for the holes 28 in the first extremity 6, the one already fixed, holes 28 that were previously used can be re-deployed. In the event that a technological improvement in constructing bands 1 in a soft material allows the operator to construct all the bands 1 of the same length and with the same degree of deformation under tension, it will be possible to use the same holes 28 several times, holes, that is, used for the first fixing of a band 1, and for subsequent fixing of new bands 1 during maintenance.

The advantages of the invention here described may be summarised as follows: fixing the covering in a soft material consisting of several bands 1 laid side by side is considerably simplified. Previous design solutions concentrated on the complex element of applying pressure to the extremities of the strips and to the protuberances on the circumference inside the said strips, which were of necessity housed within the grooves running around the circumference of the roller: with the invention here described all of this is no longer necessary. The extremity 6 of the band 1 in a soft material is pre-formed to receive the skeleton of stays which reinforces and rigidifies 20, and is anchored to said band with a line of pins 24 transverse to the direction in which tension is applied when it is mounted. The extremities 6 themselves are anchored directly to the surface of the cylinder 4 of the roller 2 and held firmly in place by the fixing elements 27. Therefore, the simplicity of the design is achieved without the need to adapt the roller's 2 cylindrical surface 4 to the application of a covering in a soft material with bands 1, as described in the invention here outlined.

In addition, the invention here described is easy to mount and maintain because what few devices it employs are very simple. Only the vice must be specifically engineered, with its lower surface 11 equipped with protuberances 13 and holes 15 and 16. These holes make it possible to mount a part 7 of the vice 5 and its respective extremity 6, to which the vice must be securely attached with anchoring elements 26; thereafter the same extremity 6 is fixed, and both the vice and extremity of the band 1 mounted with the fixing elements 27 on the cylindrical surface 4 of the roller 2. The extremity 6 is provided with the necessary skeleton structure 20 for reinforcing and rigidifying, and with pins 24 to connect with the said skeleton. In other words, the operator who performs the replacement of the covering band in a soft material might operate, if he wishes, directly, without dismounting the roller or drum of the multiple-wire machine.

Moreover, the simplicity of application and the fact that no preparation is necessary on the surface of a roller or drum on which the invention's covering is to be applied means that the application can also be carried out on rollers or drums previously produced and by any manufacturer: all that is needed is a roller or drum with a continuous, external, cylindrical surface. In fact, while the Figures show a rim between one portion of the circumference 3 and an adjoining portion 3, not numbered in the Figures, it might be envisaged, either in the construction or maintenance phase, that the adjoining bands determine the axial position of the bands being mounted, given that - at least at the edges of the cylindrical surface in the type of roller or drum used in multiple-wire machines - the said band has edges fixed or that can be dismounted when carrying out maintenance on the soft-material covering.

Moreover, managing the parts of the machine under construction or maintenance proves extremely simple: the only extra cost derives from the stock of bands 1, subdivided by length according to their applicability to different rollers or drums, and having different diameters and circumferences on the basis of the construction specifications or maintenance requirements of various types of multiple-wire cutting machine.

Obviously, a technical expert in the field will be able to make numerous modifications to the support roller or drum transmitting motion or guiding wires with diamond inserts in multiple-wire machines for cutting natural or artificial stone into blocks, as described above, all of said modifications, however, being covered by the protection limit of the invention as defined in the following claims. Thus, for example, in anchoring the tensing devices with the band's extremities, that is between vice and band, hooks might be used that can be undone in order to loosen the vice; for example with inclined joints interlocking between the two parts of the vice and each stay connected to the respective extremity of the band, so as to facilitate the loosening operation. Or else, the stays for reinforcing and rendering the band rigid might be made from a piece of the band's extremity formed when the band itself is created, that is when the band is produced or cut to the length predetermined for covering the circumference of the roller or drum it is to cover.

## Claims

1. A band in a soft material for covering a support roller or drum for transmitting movement or guiding the wires with diamond inserts in multiple-wire machines used for cutting blocks of natural or artificial stone, comprising an external surface (12) provided with grooves (14), in which two or more wires with diamond inserts (29) can be housed simultaneously, said band having a length approximating to the circumference of said roller (2) or drum on which it is to be applied; **characterised in that** on its internal surface and close to either extremity (6) and connected rigidly to said band (1), the band has a device for reinforcing and rigidifying the said extremities as well as a device for connecting the extremities to the cylindrical surface (4) of said roller or drum when the said reinforcing and rigidifying device is fixed to the cylindrical surface, in such a way as to fix each respective extremity (6) of the band, each independently of the other, on said roller (2) or drum.

2. Band, according to claim 1, in which the device for reinforcing and rigidifying comprises a skeleton of stays (20) running across the band (1), said stays being connected to the extremity (6) of the band and provided with holes (17) for fixing anchorage elements (26); with said elements the said extremity is connected to a device for tensing the band; said device being also provided with holes (18) for components fixing (27) said band to the cylindrical surface (4) of the roller (2) or drum.

3. Band, according to claim 2, in which the skeleton of transverse reinforcing stays (20) is connected to the extremity of the band by means of protuberances (21, 22) and pins (24) which are inserted, transversal with respect to the band's length, into holes (19, 23) located at the band's extremity, in the said stays or in the said protuberances of the strengthening and stiffening stays.

4. Band, according to one of previous claims, in which the device for reinforcing and rigidifying the extremities (6) are made of a rigid material purposely curved to reproduce the curvature of the cylindrical surface (4) of the roller or drum on which it is mounted.

5. Band, according to one of previous claims, in which the device for reinforcing and rigidifying presents holes (18) for fixing attachments used to apply the fixtures (27) for mounting the band on the roller or drum.

6. Band, according to one of previous claims, in which the device for reinforcing and rigidifying presents threaded holes (17) for connecting a mechanical device for tensing the band so as to mount said band on the roller or drum.

7. Roller (2) or support drum, for transmitting movement or guiding wires with diamond inserts (29) in multiple-wire machines for cutting blocks of natural or artificial stone, comprising one or more strips of soft material provided with grooves (14) on their outer surface for housing two or more wires with diamond inserts; **characterised in that** extremities (6) of said one or more strips are cut to a length slightly inferior to the circumference of the cylindrical surface (4) of the roller (2) or drum on which it is to be mounted so as to form a band (1) of a soft material for cladding the cylindrical surface of said roller or drum; the said extremities (6) being provided with a device for reinforcing and rigidifying the material so as to connect the band to a machine for tensing the extremities and fixing said extremities (6), by means of the same reinforcing and rgidifying device, to the cylindrical surface (4) of the roller (2) or drum, said fixing procedure occurring after the band (1) has been tensed to previously determined tension values by means of the said tensing procedure.

8. Roller or drum, according to claim 7, in which the tensing device consists of two parts (7) which are coupled at each of the extremities (6) of the band (1) elements for anchoring (26) the band and bringing the parts (7) together with the respective extremity (6) of the band, as well as uniting the devices for bringing the two parts together, and thus also the two extremities (6) of the band, so as to place the band (1) under the previously determined tension and in close contact with the cylindrical surface (4) of the roller (2) or drum on which it is mounted.

9. Roller or drum, according to claim 7 or claim 8 above, in which the tensing device comprises a vice (5), subdivided into two parts (7), provided with lower surfaces (11) for coupling with the external surface (12) of the said band (1) and holes (15) for housing elements for anchoring (26) each of the extremities (6), said anchorage being achieved by means of the devices for rigidifying and fixing each of the extremities to the cylindrical surface (4) of the roller (2) or drum using said rigidifying and fixing devices by means of fixing components (27) at said extremities.

10. Roller or drum according to one of the claims from 7 to 9 above, in which the elements for anchoring (26) the two extremities (6) of the band (1) and parts (7) of the tensing device comprise threaded screws inserted into threaded holes (17) in the devices for reinforcing and rigidifying each of the band's extremities.

11. Roller or drum according to any of the claims from 7 to 10 above, in which the components for fixing (27) the extremities (6) of the band and the cylindrical surface (4) of the roller or drum comprise threaded screws which are inserted into threaded holes made in the edges of the cylindrical surface (4) of the roller (2) or drum.

12. Procedure for applying a covering in a soft material to a support roller (2) or drum for transmitting movement to guiding wires with diamond inserts (29) in multiple-wire machines for cutting blocks of natural or artificial stone, comprising; applying to the cylindrical surface of the roller or drum a band in a soft material provided with grooves (14) for housing at the same time two or more wires with diamond inserts; **characterised in that** it presents phases whereby:
- the extremities (6) of the said band (1) in the soft material are provided with a device for reinforcing and rigidifying the extremities (6);
- the respective extremities (6) of the said band (1) are anchored by elements for anchoring (26) to a corresponding part (7) of a tensing mechanism, winding it onto the portion (3) of the circumference of the cylindrical surface (4) of the roller (2) or drum to be covered;
- placing the band (1) in a soft material under tension by bringing the two parts (7) of the tensing device together, thereby making the band (1) adhere to the cylindrical surface (4) of the roller or drum, conferring on the band (1) a predetermined tension value;
- fixing the first extremity of the band (6) in a soft material by applying the fixing components (27) in the device for reinforcing and rigidifying the said first extremity; fixing the second extremity of the band (1) in a soft material by applying the fixing components (27) in the device for reinforcing and rigidifying the said second extremity (6);
- loosening the tensing device and removing the elements for anchoring (26) the extremities (6) of the band (1) to the corresponding parts (7) in the tensing structure.

13. Procedure according to claim 12, whereby the first extremity (6) of the band (1) in a soft material is fixed in predisposed holes (28) in a previously mounted band (1) covering the roller (2) or drum.

14. Procedure according to claim 12 whereby the extremities (6) of the band in a soft material are fixed by means of holes made for the fixing components (27) in different parts of the cylindrical surface (4), said components being inserted into holes in the said band (1).

## Patentansprüche

1. Ein Band aus weichem Material zum Bedecken einer Stützwalze oder Trommel zum Übertragen von Bewegung oder Führen der Drähte mit Diamanteinsätzen in mehradrigen Maschinen zum Schneiden von Blöcken aus natürlichem oder künstlichem Stein, umfassend eine externe Oberfläche (12) mit Rillen (14), in denen zwei oder mehr Drähte mit Diamanteinsätzen (29) simultan aufgenommen werden können, wobei das Band eine an den Umfang der Walze (2) oder Trommel, auf die es aufgebracht werden soll, angenäherte Länge aufweist, **dadurch gekennzeichnet, dass** das Band auf seiner internen Oberfläche nahe an jeder Extremität (6) und fest mit dem Band (1) verbunden eine Einrichtung zum Verstärken und Versteifen der Extremitäten sowie eine Einrichtung zum Verbinden der Extremitäten mit der zylindrischen Oberfläche (4) der Walze oder Trommel aufweist, wenn die Verstärkungs- und Versteifungseinrichtung an der zylindrischen Oberfläche befestigt ist, derart, dass jede einzelne Extremität (6) des Bandes jeweils unabhängig von der anderen auf der Walze (2) oder Trommel befestigt ist.

2. Band nach Anspruch 1, bei welchem die Einrichtung zum Verstärken und Versteifen ein Gerüst aus Stegen (20) umfasst, die sich über das Band (1) erstrecken, wobei die Streben mit der Extremität (6) des Bandes verbunden sind und mit Bohrungen (17) zum Befestigen von Verankerungselementen (26) versehen sind und mit diesen Elementen die Extremität mit einer Einrichtung zum Spannen des Bandes verbunden ist und die Einrichtung auch mit Bohrungen (18) für Komponenten (27) verbunden ist, die das Band an der zylindrischen Oberfläche (4) der Walze (2) oder Trommel befestigen.

3. Band nach Anspruch 2, bei welchem das Gerüst aus querverlaufenden Verstärkungsstreben (20) mittels Vorsprüngen (21, 22) und Stiften (24), die quer in Bezug auf die Bandlänge in an der Bandextremität angeordnete Bohrungen (19, 23) in den Stegen oder in die Vorsprünge der verstärkenden und versteifenden Streben eingesteckt sind, mit der Extremität des Bandes verbunden ist.

4. Band nach einem der vorangehenden Ansprüche, bei welchem die Einrichtung zum Verstärken und Versteifen der Extremitäten (6) aus einem steifen Material gebildet ist und zweckmäßig zum Reproduzieren der Krümmung der zylindrischen Oberfläche (4) der Walze oder Trommel, auf der sie montiert ist, geformt ist.

5. Band nach einem der vorangehenden Ansprüche, bei welchem die Einrichtung zum Verstärken und Versteifen Bohrungen (18) zum Fixieren von Anbauten bereitstellt, die zum Anbringen der Beschläge (27) zum Montieren des Bandes auf der Walze oder Trommel verwendet werden.

6. Band nach einem der vorhergehenden Ansprüche, bei welchem die Einrichtung zum Verstärken und Versteifen Gewindebohrungen (17) zum Verbinden einer mechanischen Einrichtung zum Spannen des Bandes bereitstellt, um das Band auf der Walze oder Trommel zu montieren.

7. Walze (2) oder Stütztrommel zum Übertragen von Bewegung oder Führen von Drähten mit Diamanteinsätzen (29) in mehradrigen Maschinen zum Schneiden von Blöcken aus natürlichem oder künstlichem Stein, umfassend einen oder mehrere Streifen weichen Materials mit Rillen (14) auf ihrer äußeren Oberfläche zum Aufnehmen von zwei oder mehr Drähten mit Diamanteinsätzen, **dadurch gekennzeichnet, dass** Extremitäten (6) des/der einen oder mehreren Streifen auf eine geringfügig kürzere Länge als der Umfang der zylindrischen Oberfläche (4) der Walze (2) oder Trommel, auf der er zu montieren ist, geschnitten sind, um ein Band (1) aus einem weichen Material zum Umhüllen der zylindrischen Oberfläche der Walze oder Trommel zu bilden, wobei die Extremitäten (6) mit einer Einrichtung zum Verstärken und Versteifen des Materials versehen sind, um das Band mit einer Maschine zum Spannen der Extremitäten zu verbinden und die Extremitäten (6) mittels der gleichen Verstärkungs- und Versteifungseinrichtung an der zylindrischen Oberfläche (4) der Walze (2) oder Trommel zu befestigen, wobei die Befestigungsprozedur stattfindet, nachdem das Band (1) auf zuvor ermittelte Spannungswerte mittels der Spannprozedur gespannt wurde.

8. Walze oder Trommel nach Anspruch 7, bei der die Spanneinrichtung aus zwei Teilen (7) besteht, die an jede der Extremitäten (6) des Bandes (1) mit Verankerungselementen (26) des Bandes gekoppelt sind und die Teile (7) mit der jeweiligen Extremität (6) des Bandes zusammenbringen, wie auch die Einrichtungen zum Zusammenbringen der zwei Teile vereinigen und somit auch die zwei Extremitäten (6) des Bandes, um das Band (1) unter der zuvor ermittelten Spannung und in engem Kontakt zur zylindrischen Oberfläche (4) der Walze (2) oder Trommel zu platzieren, auf der es zu montieren ist.

9. Walze oder Trommel nach obigem Anspruch 7 oder 8, bei der die Spanneinrichtung eine in zwei Teile (7) unterteilte Schraubzwinge (5) umfasst, die mit unteren Oberflächen (11) zum Verbinden mit der externen Oberfläche (12) des Bandes (1) und Bohrungen (15) für die Aufnahme von Elementen zum Verankern (26) jeder Extremität (6) versehen ist, wobei die Verankerung mittels der Einrichtung zum Versteifen und Fixieren jeder der Extremitäten an der zylindrischen Oberfläche (4) der Walze (2) oder Trommel erreicht wird, wobei die Versteifungs- und Fixierungseinrichtungen mittels Befestigungskomponenten (27) an den Extremitäten verwendet werden.

10. Walze oder Trommel nach einem der obigen Ansprüche 7 bis 9, bei der die Elemente zum Verankern (26) der zwei Extremitäten (6) des Bandes (1) und Teile (7) der Spanneinrichtung Gewindeschrauben umfassen, die in Gewindebohrungen (17) in den Einrichtungen zum Verstärken und Versteifen jeder der Bandextremitäten eingebracht sind.

11. Walze oder Trommel nach einem der obigen Ansprüche 7 bis 10, bei der die Komponenten zum Fixieren (27) der Extremitäten (6) des Bandes und der zylindrischen Oberfläche (4) der Walze oder Trommel Gewindeschrauben umfassen, die in Gewindebohrungen eingebracht sind, welche an der Rändern der zylindrischen Oberfläche (4) der Walze (2) oder Trommel erzeugt sind.

12. Verfahren zum Aufbringen einer Abdeckung aus weichem Material auf eine Stützwalze (2) oder Trommel zum Übertragen von Bewegung zum Führen von Drähten mit Diamanteinsätzen (29) in mehradrigen Maschinen zum Schneiden von Blöcken aus natürlichem oder künstlichen Stein, umfassend Aufbringen eines Bandes aus einem weichen Material, welches mit Rillen (14) zum gleichzeitigen Aufnehmen von zwei oder mehr Drähten mit Diamanteinsätzen versehen ist, auf die zylindrische Oberfläche der Walze oder Trommel, **dadurch gekennzeichnet, dass** es die Phasen umfasst, wonach:
- die Extremitäten (6) des Bandes (1) im weichen Material mit einer Einrichtung zum Verstärken und Versteifen der Extremitäten (6) versehen sind;
- die jeweiligen Extremitäten (6) des Bandes (1) durch Elemente zum Verankern (26) an einem entsprechenden Teil (7) eines Spannmechanismus verankert sind, der es auf den Abschnitt (3) des Umfanges der zylindrischen Oberfläche (4) der zu bedeckenden Walze (2) oder Trommel wickelt;
- Setzen des Bandes (1) aus einem weichen Material unter Spannung durch Zusammenbringen der zwei Teile (7) der Spanneinrichtung, wodurch das Band (1) an der zylindrischen Oberfläche (4) der Walze oder Trommel anhaftend wird und Aufbringen eines vorbestimmten Spannungswertes auf das Band (1);
Fixieren der ersten Extremität (6) des Bandes aus weichem Material durch Einbringen der Fixierungskomponenten (27) in die Einrichtung zum Verstärken und Versteifen der ersten Extremität; Fixieren der zweiten Extremität des Bandes (1) aus weichem Material durch Einbringen der Fixierungskomponenten (27) in die Einrichtung zum Verstärken und Versteifen der zweiten Extremität (6);
- Entspannen der Spanneinrichtung und Entfernen der Elemente zum Verankern (26) der Extremitäten (6) des Bandes (1) an den entsprechenden Teilen (7) der Spannstruktur.

13. Verfahren nach Anspruch 12, bei dem die erste Extremität (6) des Bandes aus weichem Material in prädisponierten Bohrungen (28) in einem zuvor montierten Band (1) befestigt wird, welche die Walze (2) oder Trommel abdeckt.

14. Verfahren nach Anspruch 12, bei dem die Extremitäten (6) des Bandes aus weichem Material mittels Bohrungen fixiert werden, die für die Befestigungskomponenten (27) in unterschiedlichen Teilen der zylindrischen Oberfläche (4) erstellt sind, wobei die Komponenten in Bohrungen in dem Band (1) eingebracht sind.

## Revendications

1. Bande en matériau souple pour recouvrir un rouleau ou tambour de support pour transmettre un mouvement ou guider des fils avec des inserts diamantés dans des machines multifils utilisées pour couper des blocs de pierre naturelle ou artificielle, comprenant une surface externe (12) prévue avec des rainures (14), dans lesquelles deux ou plusieurs fils avec des inserts diamantés (29) peuvent être simultanément logés, ladite bande ayant une longueur s'approchant de la circonférence dudit rouleau (2) ou tambour sur lequel elle doit être appliquée ; **caractérisée en ce que**, sur sa surface interne et à proximité de chaque extrémité (6) et raccordé rigidement à ladite bande (1), ladite bande a un dispositif pour renforcer et rigidifier lesdites extrémités ainsi qu'un dispositif pour raccorder les extrémités à la surface cylindrique (4) dudit rouleau ou tambour lorsque ledit dispositif de renforcement et de rigidification est fixé sur la surface cylindrique, afin de fixer chaque extrémité (6) respective de la bande, chacune indépendamment de l'autre, sur ledit rouleau (2) ou tambour.

2. Bande selon la revendication 1, dans laquelle le dispositif de renforcement et de rigidification comprend un squelette de supports (20) s'étendant sur la bande (1), lesdits supports étant raccordés à l'extrémité (6) de la bande et étant prévus avec des trous (17) pour fixer des éléments d'ancrage (26) ; avec lesdits éléments, ladite extrémité est raccordée à un dispositif pour tendre la bande ; ledit dispositif étant également prévu avec des trous (18) pour des composants fixant (27) ladite bande à la surface cylindrique (4) du rouleau (2) ou du tambour.

3. Bande selon la revendication 2, dans laquelle le squelette de supports de renforcement transversaux (20) est raccordé à l'extrémité de la bande au moyen de protubérances (21, 22) et de broches (24) qui sont insérées, transversalement par rapport à la longueur de la bande, dans des trous (19, 23) positionnés à l'extrémité de la bande, dans lesdits supports ou dans lesdites protubérances des supports de renforcement et de raidissement.

4. Bande selon l'une des revendications précédentes, dans laquelle le dispositif pour renforcer et rigidifier les extrémités (6) est réalisé avec un matériau rigide incurvé à dessein pour reproduire la courbure de la surface cylindrique (4) du rouleau ou tambour sur lequel il est monté.

5. Bande selon l'une des revendications précédentes, dans laquelle le dispositif de renforcement et de rigidification présente des trous (18) pour fixer des fixations utilisées pour appliquer les installations (27) pour monter la bande sur le rouleau ou tambour.

6. Bande selon l'une des revendications précédentes, dans laquelle le dispositif de renforcement et de rigidification présente des trous filetés (17) pour raccorder un dispositif mécanique pour tendre la bande afin de monter ladite bande sur le rouleau ou le tambour.

7. Rouleau (2) ou tambour de support pour transmettre un mouvement ou guider des fils avec des inserts diamantés (29) dans des machines multifils pour couper des blocs de pierre naturelle ou artificielle, comprenant un ou plusieurs rubans de matériau souple doté de rainures (14) sur leur surface externe pour loger deux ou plusieurs fils avec des inserts diamantés ; **caractérisé en ce que** les extrémités (6) desdits un ou plusieurs rubans sont coupées à une longueur légèrement inférieure à la circonférence de la surface cylindrique (4) du rouleau (2) ou du tambour sur lequel elles doivent être montées afin de former une bande (1) de matériau souple pour recouvrir la surface cylindrique dudit rouleau ou tambour ; lesdites extrémités (6) étant prévues avec un dispositif pour renforcer et rigidifier le matériau afin de raccorder la bande à une machine pour tendre les extrémités et fixer lesdites extrémités (6), au moyen du même dispositif de renforcement et de rigidification, à la surface cylindrique (4) du rouleau (2) ou tambour, ladite procédure de fixation ayant lieu après que la bande (1) a été tendue à des valeurs de tension préalablement déterminées au moyen de ladite procédure de tension.

8. Rouleau ou tambour selon la revendication 7, dans lequel le dispositif de tension se compose de deux parties (7) qui sont couplées à chacune des extrémités (6) des éléments de la bande (1) pour ancrer (26) la bande et mettre en contact les parties (7) avec l'extrémité (6) respective de la bande, ainsi qu'unifier les dispositifs pour mettre en contact les deux parties, et ainsi également les deux extrémités (6) de la bande, afin de placer la bande (1) sous la tension préalablement déterminée et en contact immédiat avec la surface cylindrique (4) du rouleau (2) ou du tambour sur lequel elle est montée.

9. Rouleau ou tambour selon la revendication 7 ou la revendication 8, dans lequel le dispositif de tension comprend un étau (5) divisé en deux parties (7), prévu avec des surfaces inférieures (11) pour se coupler avec la surface externe (12) de ladite bande (1) et des trous (15) pour loger les éléments pour l'ancrage (26) de chacune des extrémités (6), ledit ancrage étant obtenu au moyen de dispositifs pour rigidifier et fixer chacune des extrémités à la surface cylindrique (4) du rouleau (2) ou du tambour en utilisant lesdits dispositifs de rigidification et de fixation au moyen des composants de fixation (27) au niveau desdites extrémités.

10. Rouleau ou tambour selon l'une des revendications 7 à 9, dans lequel les éléments pour ancrer (26) les deux extrémités (6) de la bande (1) et des parties (7) du dispositif de tension comprennent des vis filetées insérées dans des trous filetés (17) dans les dispositifs pour renforcer et rigidifier chacune des extrémités de la bande.

11. Rouleau ou tambour selon l'une quelconque des revendications 7 à 10, dans lequel les composants pour fixer (27) les extrémités (6) de la bande et la surface cylindrique (4) du rouleau ou du tambour comprennent des vis filetées qui sont insérées dans des trous filetés réalisés dans les bords de la surface cylindrique (4) du rouleau (2) ou du tambour.

12. Procédé pour appliquer un revêtement en matériau souple sur un rouleau (2) ou tambour de support pour transmettre le mouvement aux fils de guidage avec des inserts diamantés (29) dans des machines multifils pour couper des blocs de pierre naturelle ou artificielle, comprenant les étapes consistant à : appliquer, sur la surface cylindrique du rouleau ou du tambour, une bande en matériau souple prévue avec des rainures (14) pour loger, en même temps, deux ou plusieurs fils avec des inserts diamantés ; **caractérisé en ce qu'**il présente des étapes, moyennant quoi :
- les extrémités (6) de ladite bande (1) en matériau souple sont prévues avec un dispositif pour renforcer et rigidifier les extrémités (6) ;
- les extrémités (6) respectives de ladite bande (1) sont ancrées par des éléments pour ancrer (26) une partie (7) correspondante d'un mécanisme de tension, en l'enroulant sur la partie (3) de la circonférence de la surface cylindrique (4) du rouleau (2) ou du tambour à recouvrir ;
- placer la bande (1) en matériau souple sous tension en réunissant les deux parties (7) du dispositif de tension, faisant ainsi adhérer la bande (1) sur la surface cylindrique (4) du rouleau ou tambour, conférant à la bande (1) une valeur de tension prédéterminée ;
- fixer la première extrémité de la bande (6) en matériau souple en appliquant les composants de fixation (27) dans le dispositif pour renforcer et rigidifier ladite première extrémité ; fixer la seconde extrémité de la bande (1) en matériau souple en appliquant les composants de fixation (27) dans le dispositif pour renforcer et rigidifier ladite seconde extrémité (6) ;
- desserrer le dispositif de tension et retirer les éléments pour ancrer (26) les extrémités (6) de la bande (1) aux parties (7) correspondantes dans la structure de tension.

13. Procédure selon la revendication 12, moyennant quoi la première extrémité (6) de la bande (1) en matériau souple est fixée dans des trous (28) prédisposés dans une bande (1) préalablement montée recouvrant le rouleau (2) ou le tambour.

14. Procédure selon la revendication 12, moyennant quoi les extrémités (6) de la bande en matériau souple sont fixées au moyen de trous réalisés pour les composants de fixation (27) dans différentes parties de la surface cylindrique (4), lesdits composants étant insérés dans des trous dans ladite bande (1).
